# EUROPÄISCHE PATENTSCHRIFT

(11) **EP 1 803 867 B1**
(45) Veröffentlichungstag und Bekanntmachung des Hinweises auf die Patenterteilung: **20.08.2008**
(21) Anmeldenummer: 06026133.6
(22) Anmeldetag: 16.12.2006
(51) Int. Cl.: E04F 13/08, F16B 21/08, F16B 19/10

(54) **Verbindungsanordnung für übereinander liegende Materialschichten**
Joint structure for overlapping plates
Structure de joint pour des plaques chevauchantes

(30) Priorität: 27.12.2005 DE 202005020309 U
(43) Veröffentlichungstag der Anmeldung: 04.07.2007
(73) Patentinhaber: S-Fasteners GmbH, 71106 Magstadt (DE)
(72) Erfinder: Homner, Bernhard, 75365 Calw-Stammheim (DE)
(74) Vertreter: Blutke, Klaus Wilhelm

(56) Entgegenhaltungen:
- EP-B1- 0 189 569
- GB-A- 2 219 342
- US-A1- 5 217 339
- US-B1- 6 442 806

## Beschreibung

Die Erfindung bezieht sich auf eine Verbindungsanordnung für insbesondere übereinanderliegende Materialschichten.
Oftmals sind z.B. Wände ein- oder beidseits mit Schichten von Isoliermaterial versehen. Hierfür ergeben sich unterschiedliche Befestigungsmöglichkeiten: die Wände können z.B. mit den Isolierschichten verklebt sein oder mit Stift- oder SchraubVerbindungen zusammengehalten werden.

In der US Patentschrift US 6 442 806 B1 ist eine Verbindungsanordnung beschrieben, welche einen Bolzen mit Rastpositionen in zwei Bereichen umfaßt. Angenommen, der Bolzen würde eine waagerechte Position einnehmen, so würden der eine Bereich den linken Teil des Bolzens , und der andere Bereich Bereich den rechten Teil des Bolzens umfassen. Auf den Bolzen wird an seinem linken Ende von links nach rechts bzw. an seinem rechten Ende von rechts nach links ein verschiebbares Rast-Element zum Eingriff in eine Rastposition aufgeschoben.
Der Bolzen wird durch die Materialschichten geführt, welche auswärts von den Rast-Elementen zusammengehalten werden.
In dieser US Patentschrift wird auch auf einen Stand der Technik hingewiesen (US 6 442 806 B1, FIG.1 ), welcher sich auf ein stangenähnliches Befestigungs-Element mit Rastpositionen und einem freien Ende bezieht; ein auf das Befestigungs-Element aufschiebbares Rast-Element kann in einer entsprechenden Rastposition einrasten.
Die Materialschichten sind zwischen Rast-Element und Kopf des stangenähnlichen Befestigungs-Elements angeordnet.

In der Europäischen Patentschrift 0189569 B1 ist ein Befestigungselement für Platten an einer Unterkonstruktion beschrieben. Dieses umfaßt eine Halte-Kunststoffhülse mit Knautschzone und eine Halte-Druckplatte. In die Hülse ist ein steifer Stift einsetzbar, dessen Endbereich aus dem Hülsenende heraussteht. Bei der Montage wird der Stift in die Unterkonstruktion eingetrieben. Dabei wird die Hülse im Bereich der Knautschzone zusammengedrückt. Das Kopfende des Stiftes ist Runststoffummatelt, um z.B. Eindringen von Feuchtigkeit zu vermeiden.

In der US Patentschrift US 5 217 339 ist eine Verbindungsanordnung beschrieben, bei der eine Platte mittels eines Verbindungselementes auf einer Metall-Dachhaut befestigt wird. Das Verbindungselement umfaßt einen Schraubbolzen und einen auf der Platte aufliegenden Haltekopf. Der Schraubbolzen weist zwei Gewinde-Abschnitte mit unterschiedlichem Gewindedurchmesser auf: der erste Abschnitt mit kleinerem Gewindedurchmesser verläuft in der Platte, der zweite Abschnitt mit größerem Gewindedurchmesser verläuft im Haltekopf und der Platte, um eine Verdrehung des Haltekopfes auf der Platte zu verhindern.

In der Patentanmeldung GB 1221 9342A ist eine Befestigungsanordnung beschrieben, welche einen Rastbolzen umfaßt, welcher durch das Loch einer Platte gesteckt werden kann. Je nach Stecktiefe nehmen Bolzen und Platte eine auswählbare Rastposition ein. Der Rastbolzen hat abstehende flexible Zähne, die von der Innenwandung des Loches in der Platte zum Bolzen hin verbogen werden und dabei die Platte in einer bestimmten Rastposition halten.

Im Flugzeugbau unterliegen Verbindungselemente für übereinanderliegende Materialschichten besonderen Anforderungen, z.B. hinsichtlich Montagefreundlichkeit, Gewicht oder Hitzebeständigkeit. Verbindungselemente aus Kunststoff können erhöhte Anforderungen an eine "Feuerbeständigkeit" nicht erfüllen, weil Kunststoff bei größerer Hitze schmilzt oder verbrennt .

Zur Vemeidung dieser Nachteile ist es Aufgabe der Erfindung, eine Kunststoff enthaltende Verbindungsanordnung, insbesondere für übereinanderliegende Materialschichten vorzusehen, welche bei hoher Hitze ihre Funktion nicht einbüßt, auch wenn der Kunststoff schmilzt oder verbrennt.

Diese Aufgabe der Erfindung wird durch die im kennzeichnenden Teil des Anspruches 1 genannten Merkmale gelöst.
Vorteilhafte Weiterbildungen der Erfindung sind in den Unteransprüchen gekennzeichnet.

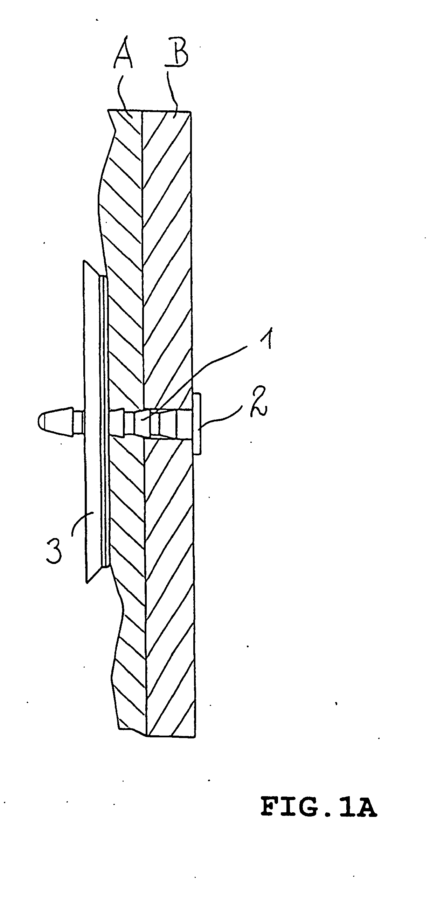

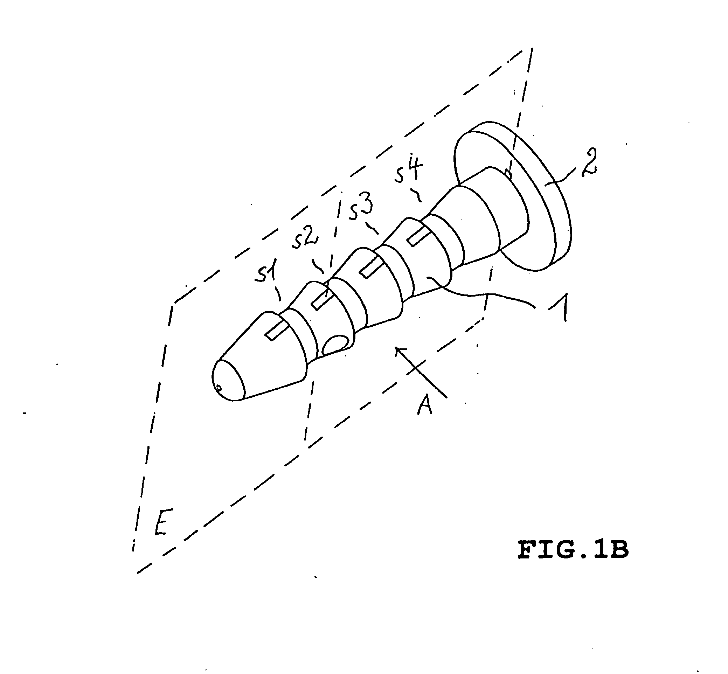

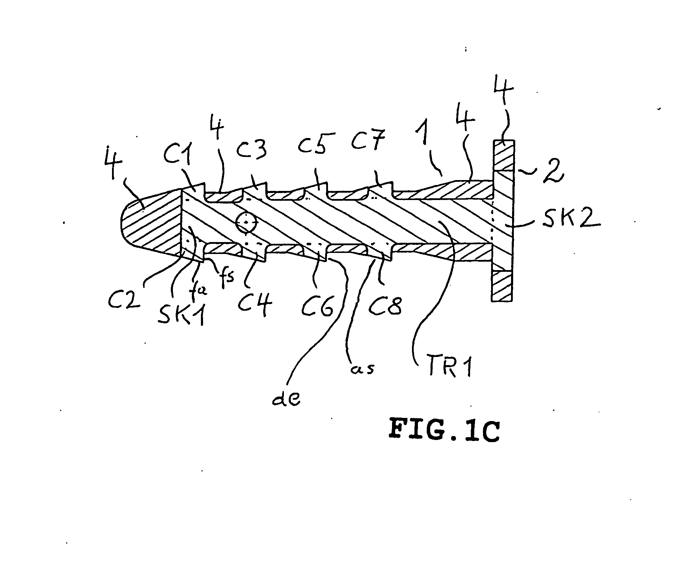

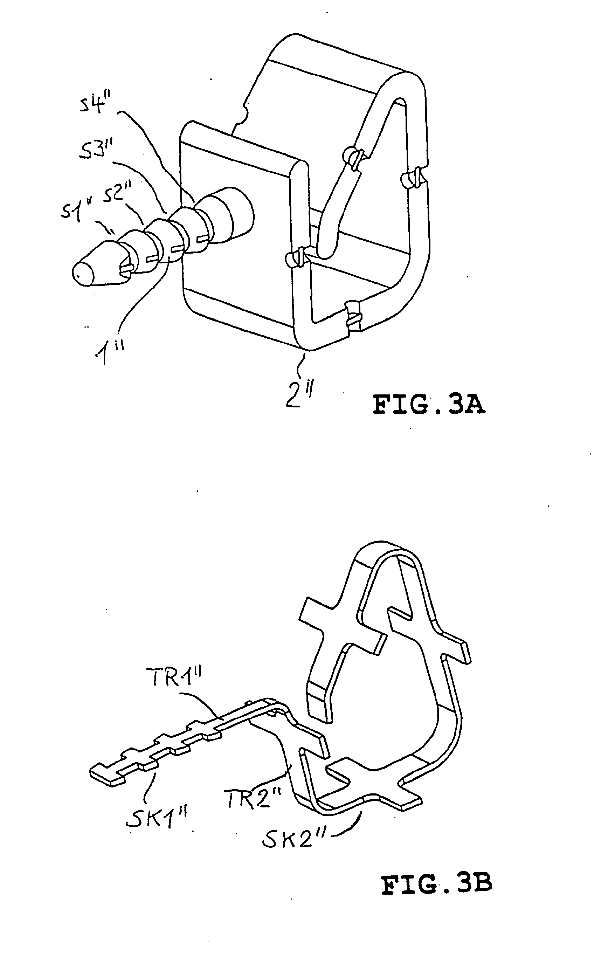

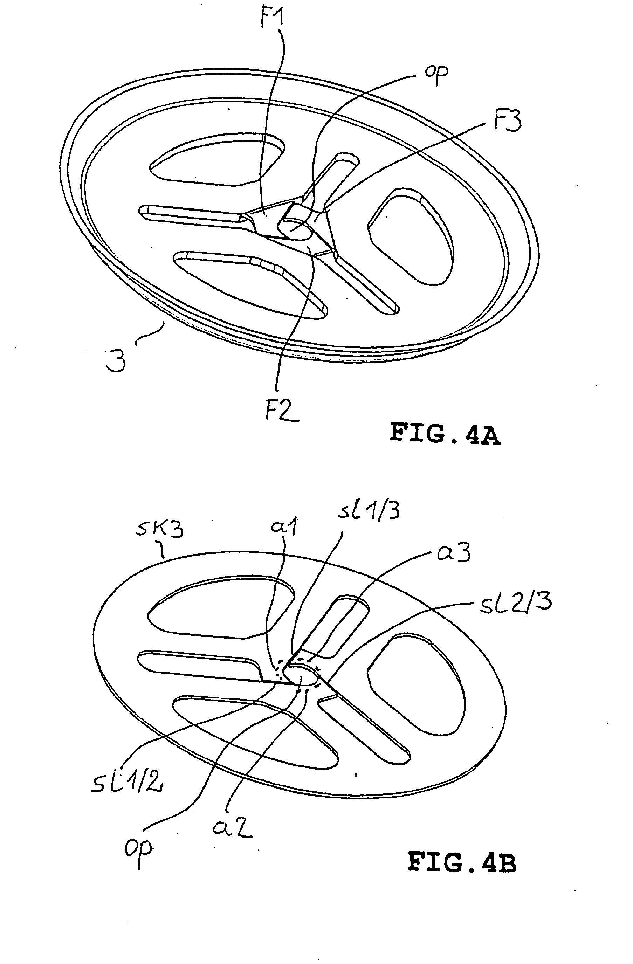

Ausführungsbeispiele der Erfindung sind in den Zeichnungen dargestellt und werden im folgenden näher beschrieben. Es zeigen:
FIG.1A
   eine Darstellung einer erfindungsgemäßen Verbindungsanordnung für zwei Materialschichten, bestehend aus einem entsprechend gestalteten stangenähnlichen Befestigungs-Element mit in einer Rastposition verbindbaren Haltescheibe;
FIG.1B
   eine perspektivische Darstellung des erfindungsgemäßen stangenähnlichen Befestigungs-Elements gemäß FIG.1A;
FIG.1C
   eine Schnittdarstellung des stangenähnlichen Befestigungs-Elements gemäß FIG.1B gemäß Schnittebene E Blickrichtung A.
FIG.2A
   eine Schnittdarstellung dreier Materialschichten und einer erfindungsgemäßen Verbindungsanordnung, bestehend aus einem entsprechend gestalteten stangenähnlichen Befestigungs-Element, dessen beide Enden mit je einer Haltescheibe verbindbar sind;
FIG.2B
   eine perspektivische Darstellung des stangenähnlichen Befestigungs-Elements gemäß FIG. 3A;
FIG.2C
   eine perspektivische Darstellung des Metall-Skeletts des stangenähnlichen Befestigungs-Elements gemäß FIG. 3A;
FIG.3A
   eine perspektivische Darstellung einer erfindungsgemäßen Verbindungsanordnung mit einer Kopfteil-Anordnung, welche der Befestigung, Aufnahme oder Aufbewahrung von Gegenständen oder Bauteilen dienen kann;
FIG.3B
   eine perspektivische Darstellung des Metall-Skeletts des stangenähnlichen Befestigungs-Elements und der Kopfteil-Anordnung.
FIG.4A
   eine perspektivische Darstellung der Haltescheibe der erfindungsgemäßen Verbindungsanordnung;
FIG.4B
   eine perspektivische Darstellung des Metall-Skeletts der Haltescheibe gemäß FIG. 4A.
FIG.1A zeigt
   eine Darstellung einer erfindungsgemäßen Verbindungsanordnung für zwei Materialschichten A und B, bestehend aus einem entsprechend gestalteten stangenähnlichen Befestigungs-Element 1 mit Kopf 2 und einer mit dem Stangenende in einer Rastposition s1, s2, s3, s4 (s. FIG. 1B) verbindbaren Haltescheibe 3.
FIG.1B zeigt
   eine perspektivische Darstellung des erfindungsgemäßen stangenähnlichen Befestigungs-Elements 1 gemäß FIG. 1A und FIG.1C
   eine Schnittdarstellung des stangenähnlichen Befestigungs-Elements 1 gemäß Schnittebene E mit Blickrichtung A in FIG.1B.

Das stangenähnliche Befestigungs-Element 1 verläuft durch eine Bohrung in der Materialschicht B, während es durch die "weichere" Dämmschicht A einfach hindurchgesteckt ist.
Wie aus FIG. 1B und FIG. 1C hervorgeht weist das stangenähnliche Befestigungs-Element 1 konzentrisch nutförmige Rastpositionen s1, s2, s3 und s4 auf zur Aufnahme einer Haltescheibe 3, welche im Zusammenhang mit FIG. 4A und 4B näher beschrieben ist.

Die Haltescheibe 3 wird am Ende des stangenähnlichen Befestigungs-Elements 1 auf dieses 1 geschoben, bis sie in einer der Rastpositionen einrastet. Zwischen dem Kopf 2 des stangenähnlichen Befestigungs-Elements 1 und der Haltescheibe 3 sind die beiden an- (bzw. über-)einanderliegenden Materialschichten A,B angeordnet.
Wären stangenähnliches Befestigungs-Element , Kopf und Haltescheibe nur aus Kunststoff hergestellt, der bei großer Hitze schmilzt oder verbrennt, so wäre z.B. bei einem Brand die Verbindung der Materialschichten nicht mehr gewährleistet. Das stangenähnliche Befestigungs-Element 1, Kopf 2 und die Haltescheibe 3 sind deshalb erfindungsgemäß mit einem Metall-Skelett SK1 , SK2 und SK3 versehen, welches in besonderer Gestaltung mit Kunststoff 4 umspritzt ist. Wird der Kunststoff durch Hitze zerstört, halten die zusammenwirkenden Skelett-Teile die Verbindung der Materialschichten A und B aufrecht. Diese bleiben auf dem Stangen-Skelett SK1 zwischen dem Kopf-Skelett SK2 und dem in der Rastposition verbiebenen Haltescheiben-Skelett SK3 angeordnet.
Das Stangen-Skelett SK1 und das Kopf-Skelett SK2 (s. FIG. 1C) können als gemeinsames ebenes Stanzteil hergestellt werden. Das Stangenskelett weist einen durchgehenden Skelettstrang TR1 mit seitlich gleichständig abstehenden Sprossen C1,C2; C3,C4; C5,C6; C7, C8 auf. Zwischen den Sprossenenden sind die Rastpositionen s1, s2, s3 und s4 ausgebildet (s. FIG.1B und 1C).

Das stangenähnliche Befestigungs-Element 1 zeigt im Längsschnitt (FIG. 1C) eine sägezahnähnliche Außenkontur: Die Rastpositionen werden von den "Zahnlücken" gebildet, welche einen horizontalen Lückengrund aufweisen können.
Die sägezahnähnliche Außenkontur wird von in Richtung des Kopfes 2 ansteigenden Zahnflanken as und zur Achse des stangenähnlichen Befestigungs-Elements hin (vorzugsweise senkrecht) abfallenden Zahnflanken de gebildet.

Kopf 2 und Haltescheibe 3 müssen nicht mit Kunststoff umspritzt sein. Jedoch ist aus Gründen der Handhabung (Vermeidung scharfer Kanten) oder leichterer Montage (Tellerrand bei der Haltescheibe) eine Kunststoffumspritzung vorteilhaft.

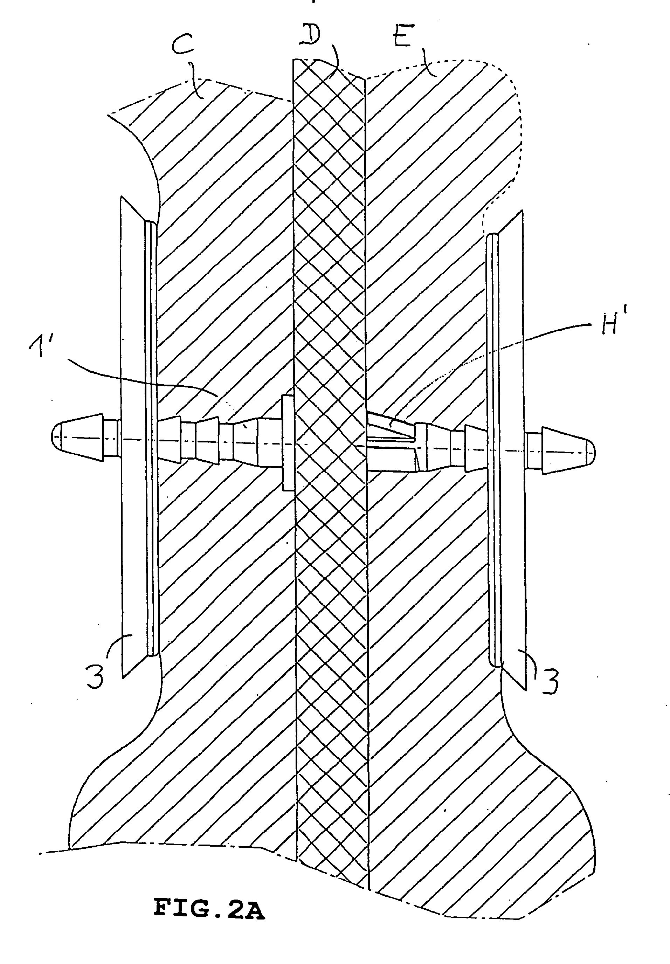

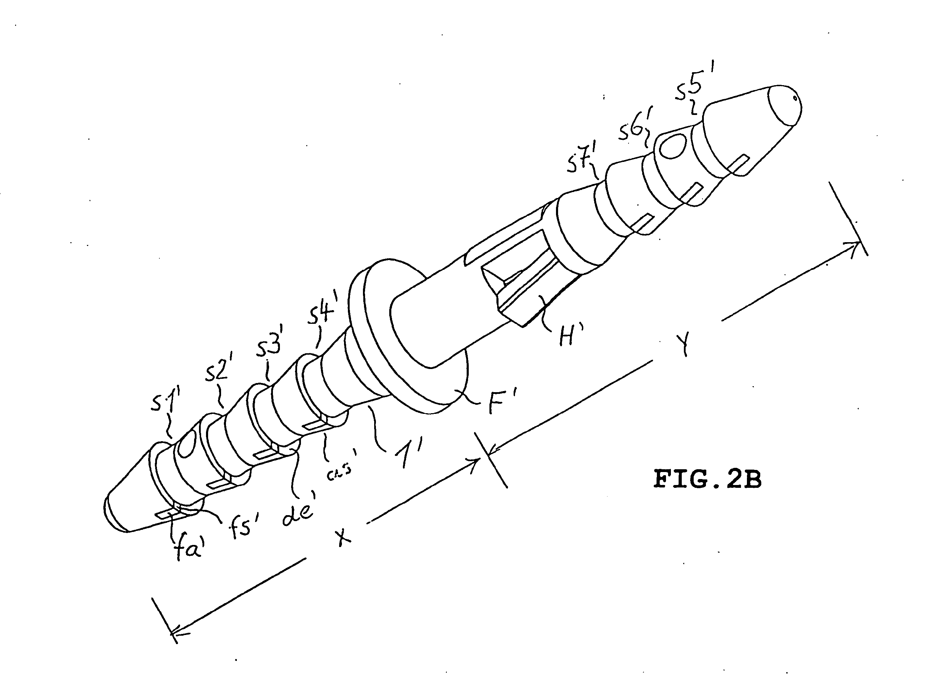

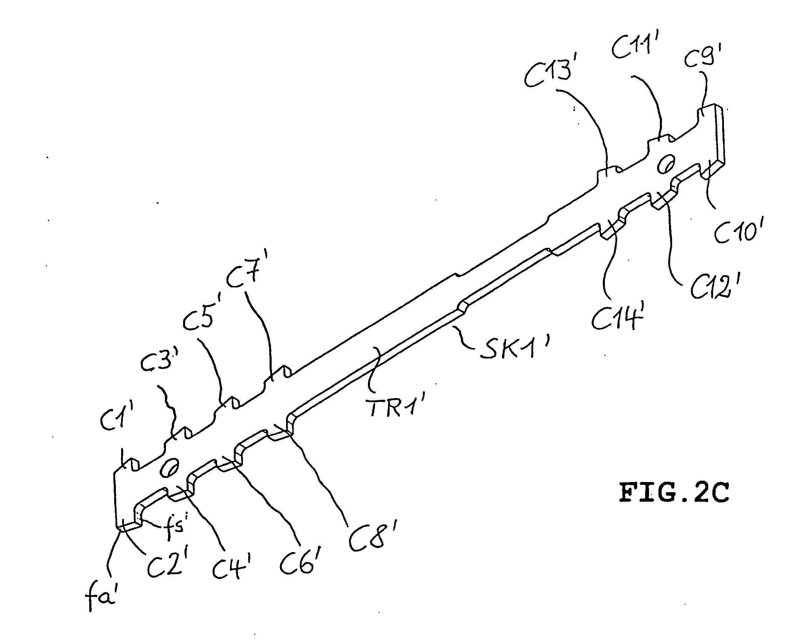

Die Fig.2A, 2B und 2C beziehen sich auf ein besonders gestaltetes stangenähnliches Befestigungs-Element 1' für das Zusammenhalten von drei Materialschichten C, D und E.

Die Materialschichten C und E können z.B. aus leicht vom stangenähnliche Befestigungs-Element durchstoßbarem Material bestehen, wie es bei "weichen" Dämm-oder Isolierplatten der Fall ist. In der härteren Materialschicht D, die kein einfaches Durchstoßen mit dem stangenähnlichen Befestigungs-Element gestattet, ist eine Bohrung vorzusehen, durch die das Befestigungs-Element hindurchgesteckt werden kann.
FIG.2A zeigt
   eine Schnittdarstellung von 3 auf- bzw. aneinanderliegenden Materialschichten C, D und E. Diese werden von einem stangenähnlichen Befestigungs-Element 1' zusammengehalten, an dessen beiden Enden Rastpositionen zur Aufnahme von je einer Haltescheibe 3 ausgebildet sind.
   Das stangenähnliche Befestigungs-Element und die Haltescheiben enthalten metallische Skelett-Teile , welche entsprechend mit Kunststoff umspritzt sind.
FIG.2B zeigt
   eine perspektivische Darstellung des stangenähnlichen stangenähnlichen Befestigungs-Elements 1' und
FIG.2C
   eine perspektivische Darstellung des metallischen Stangen-Skeletts SK1'.

Beidseits der härteren Materialschicht D ist je eine Schicht weicheren Materials C und E angeordnet.
An seinen beiden Enden weist das stangenähnliche Befestigungs-Element 1' konzentrisch verlaufende nutförmige Rastpositionen s1',s2',s3', s4' und s5', s6',s7' mit einer in gedachter Schnittdarstellung sägezahnähnlichen Außenkontur auf.
Die sägezahnähnliche Außenkontur wird von in Richtung des Flansches F' ansteigenden Zahnflanken as' und zur Achse des stangenähnlichen Befestigungs-Elements hin (vorzugsweise senkrecht) abfallenden Zahnflanken de' gebildet.
Der Flansch F' teilt das stangenähnlichen Befestigungs-Element in zwei Bereiche x und y.
Einzelheiten der Haltescheiben 3 an den beiden Enden des stangenähnlichen Befestigungs-Elements sind in Zusammenhang mit FIG.4A und FIG.4B beschrieben.
Rechts des Flansches F' ist die Materialschicht D festeren Materials angeordnet, welche von einem schräg vom stangenähnlichen Befestigungs-Elements abstehenden StützElement H' in dieser Position gehalten wird.

Alle drei Material-Schichten C, D und E werden von den auf die Enden des stangenähnlichen Befestigungs-Elements in entsprechenden Rastpositionen geschobenen Haltescheiben 3 zusammengehalten.

Das stangenähnliche Befestigungs-Element 1' umfaßt ein Stangen-Skelett SK1' aus Metall, vorzugsweise Stahl, bestehend aus einem Skelett-Hauptstrang TR1', von dem seitwärts gleichständig Sprossen C1', C2'; C3', C4'; C5',C6'; C7', C8' und C9',C10; C11',C12'; C13',C14 abstehen. Zwischen den Sprossenenden sind im stangenähnlichen Befestigungs-Element 1' die Rastpositionen s1', s2', etc. ausgebildet (s. FIG. 2B). Das Stangen-Skelett SK1' ist vorzugsweise ein ebenes Stanzteil. Es wird mit Kunststoff zu der in FIG. 2B dargestellten Gestalt umspritzt oder umgossen.
Durch Vergleich von FIG. 2C mit FIG. 2B (bzw. FIG. 1B mit FIG. 1C) ist ersichtlich, daß die Kunststoffumspritzung des Stangen-Skeletts SK1' (SK1) etwas ganz anderes als nur eine gleichmäßige Oberflächenbeschichtung des Skeletts bezweckt. Durch die Kunststoffumspritzung, welche in einer Form erfolgt, wird aus dem ebenen Stangen-Skelett SK1' (SK1) ein stangenähnlicher Körper geschaffen mit konzentrischen Einschnitten, welche die Rastpositionen darstellen.
Die Kunststoffumspritzung muß sich nicht auf alle Flächen des Skeletts erstrecken: so können zweckmäßerweise die Flächen fa' und fs' an den Sprossenenden von Kunststoff unbedeckt bleiben, um unveränderbare definierte Rastpositionen sicherzustellen. Die Funktionsfähigkeit der Verbindungsanordnung bleibt jedoch auch erhalten, wenn diese Flächen fa' und fs' eine sehr dünne Kunststoffauflage erhalten. Die Schichtdicke muß so bemessen sein, daß nach hitzebedingtem Fortfall der Schicht die Verbindung der Skeletteile aufrechterhalten bleibt.
FIG.3A zeigt
   eine perspektivische Darstellung einer erfindungsgemäßen Verbindungsanordnung, bestehend aus einem stangenähnlichen Befestigungs-Element 1" mit einer Kopfteil-Anordnung 2" und einer mit dem Stangen-Ende in einer Rastposition s1", s2", s3", s4" verbindbaren (nicht dargestellten ) Haltescheibe.
FIG.3B zeigt
   eine perspektivische Darstellung des Stangen-Skeletts SK1" und des Skeletts SK2" der Kopfteil-Anordnung.

Die Materialschichten ( aus Vereinfachungsgründen nicht dargestellt) werden auf dem stangenähnlichen Befestigungs-Element 1" (analog zu FIG.1A) zwischen Kopfteil-Anordnung 2" und Haltescheibe angeordnet.
Die Kopfteil-Anordnung 2" ist eine Anordnung zur Befestigung, Aufnahme oder Aufbewahrung von Gegenständen oder Bauteilen. Sie kann beliebig ausgebildet sein.
Das Stangenskelett SK1" ist analog zum Stangen-Skelett SK1 in FIG. 1B ausgebildet. Sein Hauptstrang TR1" mit abstehenden Sprossen ist fest mit dem Hauptstrang TR2" des Skeletts SK2" der Kopfteil-Anordnung verbunden, welches ebenfalls seitlich abstehende Sprossen aufweist. Diese dienen der Versteifung für die Kunststoffumspritzung der Kopfteil-Anordnung.
FIG.4A zeigt
   eine perspektivische Darstellung einer erfindungsgemäßen Haltescheibe 3 mit drei nach innen weisenden Federarmen F1, F2 und F3;
FIG.4B zeigt
   eine perspektivische Darstellung des metallischen Haltescheiben-Skeletts Sk3, welches zu der in FIG.4A gezeigten Gestaltung mit Kunststoff umspritzt ist. Das Haltescheiben-Skeletts Sk3 ist aus Federstahl hergestellt.

Die Federarm-Enden umfassen kreisbogensegmentförmig (a1, a2 und a 3 gemäß den gepunkteten Bögen ) eine Öffung (op), durch die das gedachte stangenähnliche Befestigungs-Element 1 (s. FIG.1A ) oder 1' (s. FIG.2A) oder 1" ( s. FIG. 3A) unter federndem Zurückweichen der Federarmenden hindurchsteckbar ist.
Um zu vermeiden, daß das Stangen-Skelett SK1 bzw. SK1' oder SK1'' (bei zusammengebauter Anordnung gemäß FIG.1A oder FIG. 2A nach Zerstörung der Kunststoffumspritzung 4 durch Hitzeeinwirkung) unerwünscht in die Schlitze s11/2, s12/3 oder s13/1 zwischen den Federarmenden ausweichen kann, sind diese Schlitze so schmal wie nur möglich, d.h. kleiner als die Dicke des Stangen-Skeletts SK1, SK1', SK1" bemessen; sie zeigen auch eine besondere Ausrichtung: Diese Schlitze sind (im Nahbereich der Öffnung) tangential auf die Öffnung op ausgerichtet.

Falls das Stangenskelett ein Winkelprofil aufweist, kann
das Halte-Rast-Element als Haltescheibe ausgebildet sein mit einem geraden Schlitz, welcher zwei zum Schlitz weisende Federarme voneinander trennt.

Die erfindungsgemäße Halte- und Verbindungsanordnung geht über die in Zusammenhang mit den Figuren beschriebenen Ausführungsbeispiele hinaus.
Die Skelett-Teile müssen nicht aus Metall und die "Kunststoff"-Umspritzung muß nicht aus Kunststoff sein. Wichtig ist, daß das Skelettmaterial hitzeresistenter als das Material ist, mit dem das Skelett umgeben ist. Es sind also auch Lösungen denkbar, wonach das Skelett aus Keramik und das umgebende Material ein Metall ist.
Für Anforderungen z.B. im Flugzeugbau, reicht es jedoch aus, für das Skelett Stahl zu verwenden und zur Umspritzung Kunststoff, insbesondere Polyamid, zu verwenden.
Die Erfindung ist auch nicht auf Skelette beschränkt, welche durch Stanzen aus einem ebenen Metallblech entstehen- als Skelette können auch kompliziertere Körper Anwendung finden. Die Halte-Elemente können je nach Ausbildung der Rastpositionen am Stift auch eine völlig andere Form als eine Haltescheibe mit nach innen gerichteten Federarmen aufweisen.

Die Erfindung ist auch nicht auf die in FIG.3A und 3B gezeigte Kopf-Anordnung beschränkt. Das erfindungsgemäße stangenähnlichen Befestigungs-Element 1" kann mit jeder beliebigen Kopf-Anordnung verbunden sein, egal, wie diese ausgebildet ist. Sie muß nur so gestaltet sein, daß sie einen Anschlag für die anliegende Materialschicht bildet.
Die Erfindung ist auch nicht auf das Zusammenhalten mehrerer Materialschichten beschränkt; sie schließt auch eine einzige Materialschicht ein, wenn es z.B. um die Befestigung einer Kopf-Anordnung an nur einer einzigen Materialschicht geht.

## Patentansprüche

1. Verbindungsanordnung für übereinander liegende Materialschichten,
welche
ein stangenähnliches durch die Materialschichten hindurchführbares Befestigungs-Element mit Rastpositionen umfaßt, wobei auf dieses stangenähnliche Befestigungs-Element von dessem freien Ende her ein verschiebliches Halte-Rast-Element aufschiebbar und in einer Rastposition anordnungsbar ist und
welche
ein fest mit diesem stangenähnlichen Befestigungs-Element verbundenes Halte-Element aufweist,
wobei die Materialschichten auf dem stangenähnlichen Befestigungs-Element zwischen dem festen Halte-Element und dem verschieblichen Halte-Rast-Element anordnungsbar sind,
**dadurch gekennzeichnet,**
**daß** das stangenähnliche Befestigungs-Element (1;1',1") einen Kopf (2) oder eine Kopf-Anordnung (2") als Halte-Element aufweist,
**daß** das stangenähnliche Befestigungs-Element (1;1',1") ein mit einem Außenmaterial (4) umspritztes oder umgossenes Stangen-Skelett ( SK1, SK1") umfaßt,
**daß** der Kopf oder die Kopf-Anordnung ein Kopf- (SK2) bzw. Kopf-Anordnung-Skelett (SK2") und das verschiebliche Halte-Rast-Element (3) ein Halte-Rast-Element-Skelett (Sk3) umfaßt,
wobei das Skelett-Material hitzeresistenter als das Außenmaterial ist,
**daß** das Stangen-Skelett (SK1; SK1") einen in der Länge der Stange (1; 1') verlaufenden durchgehenden Skelett-Hauptstrang (TR1, TR1') aufweist
mit seitlich von diesem abstehenden Sprossen (C1,C2,C3,C4,C5,C6,C7,C8) oder Vorsprüngen, zwischen deren Enden die Rastpositionen (s1, s2, s3, s4; s1", s2", s3", s4") ausgebildet sind, daß nach gedachter Zerstörung des Außenmaterials durch Verbrennen oder Schmelzen infolge Hitzeeinwirkung die verbleibenden Skelett-Teile von dem stangenähnliche Befestigungs-Element, Kopf bzw. Kopf-Anordnung und Halte-Rast-Element ihre Halte- und Verbindungsfunktion bezüglich der Materialschichten beibehalten.

2. Anordnung nach Anspruch 1,
**dadurch gekennzeichnet,**
**daß** das stangenähnliche Befestigungs-Element (1') zwei Bereiche (x,y) mit freien Enden aufweist,
**daß** diese Bereiche Rastpositionen (s1', s2', s3', s4'; s5', s6', s7') umfassen zur Anordnung je eines verschiebbaren Halte-Rast-Elementes (3, 3),
**daß** zwischen den Bereichen (x,y) des stangenähnlichn Befestigungs-Elements (1') ein Flansch (F') als Halte-Element angeordnet ist und daß beidseits des Flansches (F') und den Halte-Rast-Elementen Materialschichten ( C; D,E)
anordnungsbar sind,
das das stangenähnliche Befestigungs-Element (1') ein mit einem Außenmaterial (4) umspritztes oder umgossenes Stangen - Skelett ( SK1') umfaßt ,
**daß** das Halte-Rast-Element (3, 3 ) ein Halte-Rast-Element-Skelett (SK1') umfaßt,
**daß** das Skelett-Material hitzeresistenter als das Außenmaterial ist,
**daß** das Stangen-Skelett (SK1') einen in der Länge des stangenähnlichn Befestigungs-Element ( 1') verlaufenden durchgehenden Skelett-Hauptstrang (TR1') aufweist mit seitlich von diesem abstehenden Sprossen (C1', C2', C3', C4', C5', C6', C7', C8'; C9', C10', C11', C12' C13', C14') oder Vorsprüngen, zwischen deren Enden die Rastpositionen (s1', s2', s3', s4'; s5', s6', s7') ausgebildet sind,
wobei nach gedachter Zerstörung des Außenmaterials durch Verbrennen oder Schmelzen infolge Hitzeeinwirkung die verbleibenden Skelett-Teile von dem stangenähnlichen Befestigungs-Element und den Halte-Rast-Elementen ihre Halte-und Verbindungsfunktion bezüglich der Materialschichten beibehalten.

3. Anordnung nach Anspruch 1 oder 2,
**dadurch gekennzeichnet, daß**
das Kopf- (SK2) bzw. Kopf-Anordnung-Skelett (SK2") und/oder das Halte-Element-Skelett (SK3) und/oder die Außenflächen (fa, fs) der Sprossen an den Rastpositionen mit Außenmaterial umspritzt oder umgossenen sind.

4. Anordnung nach Anspruch 1 oder 2,
**dadurch gekennzeichnet, daß**
die Außenflächen (fa, fs) der Sprossen an den Rastpositionen nicht von Außenmaterial bedeckt sind.

5. Anordnung nach Anspruch 1,
**dadurch gekennzeichnet, daß**
die Kopf-Anordnung (2") eine Anordnung zur Befestigung, Aufnahme oder Aufbewahrung von Gegenständen oder Bauteilen ist.

6. Anordnung nach einem der Ansprüche 1 bis 5,
**dadurch gekennzeichnet,**
**daß** das stangenähnliche Befestigungs-Element (1,1',1") im gedachten Längsschnitt eine sägezahnartige Außenkontur aufweist mit von den Zahnlücken gebildeten Rastpositionen (s1, s2, ...; s1', s2', ...; s1", s2", ...).

7. Anordnung nach Anspruch 6,
**dadurch gekennzeichnet, daß**
das sägezahnartige Profil ansteigende Zahnflanken und abfallende Zahnflanken umfaßt.

8. Anordnung nach Anspruch 7,
**dadurch gekennzeichnet, daß**
die ansteigenden Zahnflanken auf dem stangenähnlichn Befestigungs-Element in Richtung des Kopfes, der Kopfanordnung oder in Richtung des anderen Endes des stangenähnliche Befestigungs-Elements ansteigen und die abfallenden Zahnflanken senkrecht zur Achse des stangenähnlichen Befestigungs-Elementes verlaufen.

9. Anordnung nach Anspruch 1 oder 2,
**dadurch gekennzeichnet, daß**
das Stangen-Skelett (SK1, SK1', SK1") ein ebenes Stanzteil ist.

10. Anordnung nach Anspruch 1 oder 2,
**dadurch gekennzeichnet,**
**daß** das Halte-Rast-Element eine Halte-Scheibe (3) ist mit mindestens drei zur Haltescheiben-Mitte weisenden Federarme (F1, F2, F3).

11. Anordnung nach Anspruch 10,
**dadurch gekennzeichnet, daß**
die Federarm-Enden eine Öffung (op) kreisbogensegmentförmig (a1, a2, a3) umfassen, durch die das stangenähnliche Befestigungs-Element (1; 1'; ;1") unter federndem Zurückweichen der Federarme hindurchsteckbar ist.

12. Anordnung nach Anspruch 11,
**dadurch gekennzeichnet, daß**
benachbarte Federarmenden an der Öffnung (op) durch einen Schlitz (s11/2, s12/3, s13/1) getrennt sind, wobei die Schlitzbreite wesentlich kleiner als die Dicke des Stangen-Skeletts ist.

13. Anordnung nach Anspruch 12,
**dadurch gekennzeichnet,**
**daß** die auf die Öffnung (op) zulaufenden Schlitze (sl1/2, sl2/3, sl3/1) im Nahbereich der Öffnung (op) tangential auf die Öffnung (0p) ausgerichtet sind.

14. Anordnung nach Anspruch 1 oder 2,
**dadurch gekennzeichnet**
**daß** das Stangenskelett ein Winkelprofil aufweist und
**daß** das Halte-Rast-Element eine Haltescheibe ist mit einem geraden Schlitz, welcher zwei zum Schlitz weisende Federarme voneinander trennt.

15. Anordnung nach Anspruch 2,
**dadurch gekennzeichnet,**
**daß** das stangenähnliche Befestigungs-Element (1') schräg nach außen weisende Stützelemente (H) für Materialschichten aufweist.

16. Anordnung nach einem der Ansprüche 1 bis 15
**dadurch gekennzeichnet,**
**daß** das Außenmaterial Kunststoff , vorzugsweise Polyamid, und das Skelettmaterial Metall, vorzugsweise Stahl, ist.

17. Anordnung nach Anspruch 5,
**dadurch gekennzeichnet,**
**daß** auf dem stangenähnlichen Befestigungs-Element zwischen Kopf-Anordnung und Halte-Element nur eine einzige Materialschicht angeordnet ist.

## Claims

1. Connection arrangement for superimposed layers of material,
which
comprises a rod-like fixing element with engaging positions which can be pushed through the layers of material, where a movable retaining and engaging element can be pushed onto this rod-like fixing element from its free end and then located in an engaged position,
and which
comprises a retaining element joined permanently to this rod-like fixing element, where the layers of material on the rod-like fixing element are located between the fixed retaining element and the movable retaining and engaging element,
**characterised in**
**that** the rod-like fixing element (1;1', 1") has a head (2) or a head arrangement (2") as retaining element,
**that** the rod-like fixing element (1;1', 1") includes a rod skeleton (SK1, SK1") coated with an outer material (4) by moulding or injection moulding,
**that** the head or head arrangement includes a head skeleton (SK2) or head-arrangement skeleton (SK2"), and the movable retaining and engaging element (3) a retaining-element skeleton (Sk3), where the material of the skeleton is more resistant to heat than the outer material,
**that** the rod skeleton (SK1, SK1") has a main shaft (TR1, TR1') extending continuously over the length of the rod (1; 1'),
with rungs (C1, C2, C3, C4, C5, C6, C7, C8) or projections projecting laterally from this, between whose ends the engaging positions (s1, s2, s3, s4; s1", s2", s3", s4") are formed, that following possible destruction of the outer material by burning or melting, the remaining skeleton parts of the rod-like fixing element, the head or head arrangement and the retaining and engaging element maintain their retaining and fixing function with reference to the layers of material.

2. Arrangement according to claim 1,
**characterised in**
**that** the rod-like fixing element (1') is provided with two sections (x, y) with free ends,
**that** these section include the engaging positions (s1', s2', s3', s4'; s5', s6', s7') for the location of one movable retaining and engaging element (3, 3) each,
**that** a flange (F') is arranged as a retaining element between the sections (x,y) of the rod-like fixing element (1') and that layers of material (C; D,E) are located on either side of the flange (F') and the rod-like fixing elements,
**that** the rod-like fixing element (1') includes a rod skeleton (SK1') coated with an outer material (4) by moulding or injection moulding,
**that** the retaining and engaging element (3, 3) includes a retaining-element skeleton (SK1'),
**that** the material of the skeleton is more resistant to heat than the outer material,
**that** the rod skeleton (SK1') has a main skeleton shaft (TR1') extending continuously over the length of the rod-like fixing element (1'), with rungs (C1', C2', C3', C4', C5', C6', C7', C8'; C9', C10', C11', C12', C13', C14') or projections projecting laterally from this, between whose ends the engaging positions (s1', s2', s3', s4'; s5', s6', s7') are formed, where, following possible destruction of the outer material by burning or melting, the remaining skeleton parts of the rod-like fixing element and the retaining and engaging elements maintain their connecting and retaining function with reference to the layers of material.

3. Arrangement according to claim 1 or claim 2,
**characterised in that**
the skeleton of the head (SK2), the skeleton of the head arrangement (SK2") and/or the skeleton of the retaining element (SK3) and/or the outer surfaces (fa, fs) of the rungs are coated with outer material at the engaging positions by moulding or injection moulding.

4. Arrangement according to claim 1 or claim 2,
**characterised in that**
the outer surfaces (fa, fs) of the rungs are not covered by an outer material at the engaging positions.

5. Arrangement according to claim 1,
**characterised in that**
the head arrangement (2") is an arrangement for attaching, holding or storing objects or components.

6. Arrangement according to any of the claims 1 to 5,
**characterised in that** the rod-like fixing element (1, 1', 1") has an outer saw-tooth contour in the imaginary lengthwise section, with engaging positions (s1, s2, ...; s1', s2', ...; s1", s2", ...) formed by the gaps between the teeth.

7. Arrangement according to claim 6,
**characterised in that** the saw-tooth profile has rising and falling tooth flanks.

8. Arrangement according to claim 7,
**characterised in that**
the rising tooth flanks on the rod-like fixing element rise towards the head, the head arrangement or towards the other end of the rod-like fixing element and the falling tooth flanks run vertically to the axis of the rod-like fixing element.

9. Arrangement according to claim 1 or claim 2,
**characterised in that**
the rod skeleton (SK1, SK1', SK1") is a flat stamping.

10. Arrangement according to claim 1 or claim 2,
**characterised in that**
the retaining and engaging element is a retaining disk (3) with at least three spring arms (F1, F2, F3) pointing towards the centre of the retaining disk.

11. Arrangement according to claim 10,
**characterised in that**
the ends of the spring arms embrace, in the form of an arc of a circle (a1, a2, a3), an opening (op) through which the rod-like fixing element (1, 1', 1") can be pushed thereby causing the spring arms to yield resiliently.

12. Arrangement according to claim 11,
**characterised in that**
adjacent ends of spring arms at the opening (op) are separated by a slit (s11/2, s12/3, s13/1), where the width of the slit is considerably less than the thickness of the rod skeleton.

13. Arrangement according to claim 12,
**characterised in that**
the slits (s11/2, s12/3, s13/1) running towards the opening (op) are aligned tangentially to the opening (op) in the vicinity of the opening (op).

14. Arrangement according to claim 1 or claim 2,
**characterised in that**
the rod skeleton has an angle profile, and that the retaining and engaging element is a retaining disk with a straight slit which separates from one another two spring arms pointing towards the slit.

15. Arrangement according to claim 2,
**characterised in that**
the rod-like fixing element (1') has supporting elements (H) projecting obliquely outwards for layers of material.

16. Arrangement according to any of the claims 1 to 15,
**characterised in that**
the outer material is plastic, preferably polyamide, and the skeleton material is metal, preferably steel.

17. Arrangement according to claim 5,
**characterised in that**
only one layer of material is arranged on the rod-like fixing element between the head arrangement and the retaining element.

## Revendications

1. Dispositif de liaison de couches de matériaux superposées, qui
comprend un élément de fixation en forme de barre pouvant traverser les couches de matériau, avec des positions d'engagement, un élément d'engagement et de maintien coulissant pouvant être enfilé sur cet élément de fixation en forme de barre par son extrémité libre et disposé dans une position d'engagement,
et qui possède un élément de maintien fixé à cet élément de fixation en forme de barre,
les couches de matériau pouvant être disposées sur l'élément de fixation en forme de barre entre l'élément de maintien fixe et l'élément de maintien et d'engagement coulissant,
**caractérisé en ce que** l'élément de fixation en forme de barre (1 ; 1', 1") présente une tête (2) ou un dispositif formant une tête (2") qui sert d'élément de maintien,
**en ce que** l'élément de fixation en forme de barre (1 ; 1', 1") comprend un squelette de barres (SK1, SK1") recouvert par injection ou coulée d'un matériau extérieur (4) ;
**en ce que** la tête ou le dispositif formant une tête comprend un squelette de tête (SK2) ou de dispositif formant une tête (SK2") et l'élément de maintien et d'engagement coulissant (3) comprend un squelette d'élément de maintien et d'engagement (SK3), le matériau du squelette étant plus résistant à la chaleur que le matériau extérieur ;
**en ce que** le squelette de barres (SK1 ; SK1") présente une tige de squelette principale (TR1, TR1') continue orientée dans le sens de la longueur de la barre (1 ; 1') avec des barreaux (C1, C2, C3, C4, C5, C6, C7, C8) ou saillies s'écartant d'elle latéralement, entre les extrémités desquels les positions d'engagement (s1, s2, s3, s4 ; s1", s2", s3", s4") sont formées ;
**en ce qu'**après la destruction envisagée du matériau extérieur par combustion ou fusion sous l'action de chaleur, les parties restantes du squelette de l'élément de fixation en forme de barre, de la tête ou du dispositif formant une tête et de l'élément de maintien et d'engagement conservent leur fonction de maintien et de liaison par rapport aux couches de matériau.

2. Dispositif selon la revendication 1, **caractérisé en ce que** l'élément de fixation en forme de barre (1') comprend deux zones (x, y) ayant des extrémités libres,
**en ce que** ces zones comprennent des positions d'engagement (s1', s2', s3', s4' ; s5', s6', s7') dans chacune desquelles un élément de maintien et d'engagement coulissant (3, 3) peut être disposé,
**en ce qu'**il est prévu entre les zones (x, y) de l'élément de fixation en forme de barre (1') une bride (F') servant d'élément de maintien et **en ce que** des couches de matériau (C ; D, E) peuvent être disposées de part et d'autre de la bride (F') et des éléments de maintien et d'engagement ;
**en ce que** l'élément de fixation en forme de barre (1') comprend un squelette de barres (SK1') recouvert par injection ou coulée d'un matériau extérieur (4) ;
**en ce que** l'élément de maintien et d'engagement (3, 3) comprend un squelette d'élément de maintien et d'engagement (SK1');
**en ce que** le matériau du squelette est plus résistant à la chaleur que le matériau extérieur ;
**en ce que** le squelette de barres (SK1') comprend une tige principale de squelette (TR1') continue qui s'étend dans le sens de la longueur de l'élément de fixation en forme de barre (1') avec des barreaux (C1', C2', C3', C4', C5', C6', C7', C8' ; C9', C10' , C11', C12', C13', C14') ou des saillies s'écartant d'elle latéralement, entre les extrémités desquels les positions d'engagement (s1', s2', s3', s4' ; s5', s6', s7', s8') sont formées ;
dans lequel, après la destruction envisagée du matériau extérieur par combustion ou fusion sous l'action de chaleur, les parties restantes du squelette de l'élément de fixation en forme de barre et de l'élément de maintien et d'engagement conservent leur fonction de maintien et de liaison par rapport aux couches de matériau.

3. Dispositif selon la revendication 1 ou 2, **caractérisé en ce que** le squelette de la tête (SK2) ou du dispositif formant une tête (SK2") et/ou le squelette de l'élément de maintien (SK3) et/ou les surfaces extérieures (fa, fs) des barreaux sont enrobés par injection ou coulée d'un matériau extérieur dans les positions d'engagement.

4. Dispositif selon la revendication 1 ou 2, **caractérisé en ce que** les surfaces extérieures (fa, fs) des barreaux ne sont pas couvertes de matériau extérieur dans les positions d'engagement.

5. Dispositif selon la revendication 1, **caractérisé en ce que** le dispositif formant une tête (2") est un dispositif pour fixer, recevoir ou ranger des objets ou des pièces.

6. Dispositif selon l'une des revendications 1 à 5, **caractérisé en ce que** l'élément de fixation en forme de barre (1, 1', 1" ) présente, en coupe longitudinale imaginaire, un contour
extérieur en dents de scie avec des positions d'engagement (s1, s2, ... ; s1', s2', ...;; s1", s2", ...) formées par les entredents.

7. Dispositif selon la revendication 6, **caractérisé en ce que** le profil en dents de scie comprend des flancs de dent ascendants et descendants.

8. Dispositif selon la revendication 7, **caractérisé en ce que** les flancs de dent ascendants sur l'élément de fixation en forme de barre montent en direction de la tête, du dispositif formant une tête, ou en direction de l'autre extrémité de l'élément de fixation en forme de barre et les flancs de dent descendants sont perpendiculaires à l'axe de l'élément de fixation en forme de barre.

9. Dispositif selon la revendication 1 ou 2, **caractérisé en ce que** le squelette de barres (SK1, SK1', SK1") est une pièce plane découpée à l'emporte-pièce.

10. Dispositif selon la revendication 1 ou 2, **caractérisé en ce que** l'élément de maintien et d'engagement est un disque de maintien (3) avec au moins trois bras de ressort (F1, F2, F3) orientés vers le centre du disque de maintien.

11. Dispositif selon la revendication 10, **caractérisé en ce que** les extrémités des bras de ressort entourent en forme de segment d'arc de cercle (a1, a2, a3) une ouverture (op) à travers laquelle l'élément de fixation en forme de barre (1 ; 1' ; 1") peut être passé en écartant de façon élastique les bras de ressort.

12. Dispositif selon la revendication 11, **caractérisé en ce que** les extrémités voisines des bras de ressort sont séparées au niveau de l'ouverture (op) par une fente (s11/2, s12/3, s13/1), dont la largeur est nettement plus petite que l'épaisseur du squelette de barres.

13. Dispositif selon la revendication 12, **caractérisé en ce que** les fentes (s11/2, s12/3, s13/1) allant jusqu'à l'ouverture (op) sont orientées à proximité de l'ouverture (op) de façon à être tangentes de l'ouverture (op).

14. Dispositif selon la revendication 1 ou 2, **caractérisé en ce que** le squelette de barres présente un profil angulaire et **en ce que** l'élément de maintien et d'engagement est un disque de maintien avec une fente rectiligne qui sépare deux bras de ressorts dirigés vers la fente l'un de l'autre.

15. Dispositif selon la revendication 2, **caractérisé en ce que** l'élément de fixation en forme de barre (1') présente des bras de support (H) dirigés à l'oblique vers l'extérieur pour des couches de matériau.

16. Dispositif selon l'une des revendications 1 à 15, **caractérisé en ce que** le matériau extérieur est une matière plastique, de préférence du polyamide, et le matériau du squelette est un métal, de préférence de l'acier.

17. Dispositif selon la revendication 5, **caractérisé en ce qu'**une seule couche de matériau est disposée sur l'élément de fixation en forme de barre entre le dispositif formant une tête et l'élément de maintien.
